# EUROPEAN PATENT SPECIFICATION

(11) **EP 4 273 023 B1**
(45) Date of publication and mention of the grant of the patent: **05.11.2025**
(21) Application number: 23172069.9
(22) Date of filing: 08.05.2023
(51) Int. Cl.: B62B 9/26

(54) **BABY CARRIAGE**
KINDERWAGEN
VOITURE D'ENFANT

(30) Priority: 06.05.2022 CN 202210489660
(43) Date of publication of application: 08.11.2023
(73) Proprietor: Wonderland Switzerland AG, 6312 Steinhausen (CH)
(72) Inventor: YUAN, Jialiang, Dongguan, Guangdong, 523648 (CN)
(74) Representative: Lucke, Andreas

(56) References cited:
- CN-Y- 2 808 687
- US-A1- 2005 040 625
- US-A1- 2005 225 056
- US-A1- 2021 139 066

## Description

### TECHNICAL FIELD

The present invention relates to the technical field of baby carriages, in particular, to a baby carriage.

### BACKGROUND

In order to facilitate travel, baby carriages, such as strollers, are generally provided with storage baskets. However, arranging a storage basket on the baby carriage often restricts the mounting of other components on the baby carriage, such as a second riding component. In addition, the storage capacity of the storage basket is quite limited. When items of large volumes need to be accommodated, the storage basket generally cannot meet the requirements of users. US 2021/139066 A1, US 2005/225056 A1, US 2005/040625 A1, and CN 2 808 687 Y disclose conventional strollers with baskets.

### SUMMARY

Accordingly, it is necessary to provide a baby carriage, a storage basket of which will not interfere with the mounting of other components on the baby carriage, and which can flexibly accommodate items of various volumes.

A baby carriage includes a frame, a storage basket including a first basket frame, and two adjusting mechanisms. Two ends of the first basket frame are movably connected to two sides of the frame through the two adjusting mechanisms, respectively.

In the above baby carriage, the two ends of the first basket frame of the storage basket can be movably connected to two sides of the frame through two adjusting mechanisms, so that when it is necessary to mount the second riding component or other components on the baby carriage, the first basket frame can be folded without interference trouble. In addition, when items of large volumes need to be accommodated, the first basket frame can be moved to provide users with a larger storage space.

According to the present invention, the adjusting mechanism includes a rotating base. The rotating base is pivotally connected to the frame. An end of the first basket frame is connected to the rotating base.

According to the present invention, the adjusting mechanism further includes a resetting member. The rotating base includes a rotating disk and a connecting arm connected to the rotating disk. The rotating disk is pivotally connected to the frame. An end of the resetting member is connected to the frame, and another end of the resetting member is connected to the connecting arm.

In an embodiment, a protruding post is arranged on the frame, and the end of the resetting member is connected to the protruding post.

In an embodiment, the rotating base further includes a limiting part. A blocking arm is arranged on the frame. The limiting part is capable of abutting against the blocking arm to limit a rotation angle of the connecting arm.

In an embodiment, the adjusting mechanism further includes a fixed base. A first matching part is arranged on the fixed base, and a second matching part capable of matching the first matching part is arranged on the rotating base. The end of the first basket frame is fixedly connected to the fixed base, the fixed base is engaged with the rotating base by matching the first matching part with the second matching part.

In an embodiment, the first matching part is a matching protrusion, and a plurality of matching protrusions are provided and evenly arranged on the fixed base. The second matching part is a matching recess, and a plurality of matching recesses are provided and evenly arranged on the rotating base.

In an embodiment, the adjusting mechanism further includes a rotating shaft; and the fixed base includes a mounting groove. The end of the first basket frame is inserted into the mounting groove, and the rotating shaft extends through the fixed base and the end of the first basket frame, to fix the end of the first basket frame on the fixed base.

In an embodiment, the first basket frame is a U-shaped frame. The U-shaped frame includes a cross rod, and a first strut and a second strut respectively connected to two ends of the cross rod. An end of the first strut away from the cross rod and an end of the second strut away from the cross rod are movably connected to the two sides of the frame, respectively.

In an embodiment, the frame includes two opposite rear foot support rods. The two ends of the first basket frame are movably connected to the two rear foot support rods through the two adjusting mechanisms, respectively.

In an embodiment, the two adjusting mechanisms are at least partially arranged at inner sides of the two rear foot support rods, respectively.

### BRIEF DESCRIPTION OF THE DRAWINGS

FIG. 1 is a structural schematic view of a baby carriage according to an embodiment of the present invention, where a second riding component is not mounted, and a covering fabric is omitted.
FIG. 2 is an enlarged view of a portion A of FIG. 1, where a storage basket is completely unfolded.
FIG. 3 is a schematic view of an internal structure of FIG. 2.
FIG. 4 is a structural schematic view of the structure shown in FIG. 2 when the storage basket is completely folded.
FIG. 5 is a schematic view of an internal structure of FIG. 4.
FIG. 6 is an exploded view of FIG. 2.
FIG. 7 is a structural schematic view of FIG. 3, where a limiting part is omitted.
FIG. 8 is a structural schematic view of FIG. 5, where a limiting part is omitted.
FIG. 9 is a structural schematic view of a fixed base shown in FIG. 8, from another view.
FIG. 10 is a structural schematic view of a baby carriage according to another embodiment of the present invention, where a second riding component is a storage basket.
FIG. 11 is a structural schematic view of the baby carriage shown in FIG. 10, where the storage basket is removed.
FIG. 12 is a structural schematic view of the baby carriage shown in FIG. 11 when the storage basket is completely folded.
FIG. 13 is a structural schematic view of a baby carriage according to yet another embodiment of the present invention, where a second riding component is a vehicle seat.
FIG. 14 is a structural schematic view of a baby carriage according to yet another embodiment of the present invention, where a second riding component is a baby sleeping box.
FIG. 15 is a structural schematic view of a baby carriage according to yet another embodiment of the present invention, where a second riding component is a child seat.
FIG. 16 is a structural schematic view of the baby carriage shown in FIG. 1 with the covering fabric.

Illustration for reference signs:
100, frame; 110, armrest support rod; 120, front foot support rod; 130, rear foot support rod; 132, mounting base; 132a, protruding post; 132b, blocking arm; 133, mounting cover; 133a, mounting opening; 140, wheel component; 150, first riding component; 160, second riding component; 200, storage basket; 210, first basket frame; 211, cross rod; 212, first strut; 212a, fixing hole; 213, second strut; 220, covering fabric; 300, adjusting mechanism; 310, rotating base; 311, rotating disk; 311a, matching recess; 311b, third pivot hole; 312, connecting arm; 313, limiting part; 320, resetting member; 330, fixed base; 331, fixed body; 331a, mounting groove; 331b, first pivot hole; 332, matching protrusion; 340, rotating shaft.

### DETAILED DESCRIPTION OF THE EMBODIMENTS

In order to make the object, technical solution and advantages of the present invention clearer, the present invention will be further described in detail below in conjunction with the accompanying drawings and specific implementation methods. It should be understood that the specific embodiments described herein are only used to explain the present invention, and do not limit the protection scope of the present invention, which is defined solely by the appended claims.

It should be noted that when an element is referred to as being "fixed" to another element, it can be directly on the other element or an intermediate element may also be present. When an element is referred to as being "connected to" another element, it can be directly connected to the other element or an intermediate element may also be present. The terms "vertical," "horizontal," "left," "right," and similar expressions are used herein for purposes of illustration only and are not intended to represent the only embodiments.

Unless otherwise defined, all technical and scientific terms used herein have the same meaning as commonly understood by one of ordinary skill in the technical field of the present application. The terminology used herein in the description of the present application is only for the purpose of describing specific embodiments, and is not intended to limit the present application. As used herein, the term "and/or" includes any and all combinations of one or more of the associated listed items.

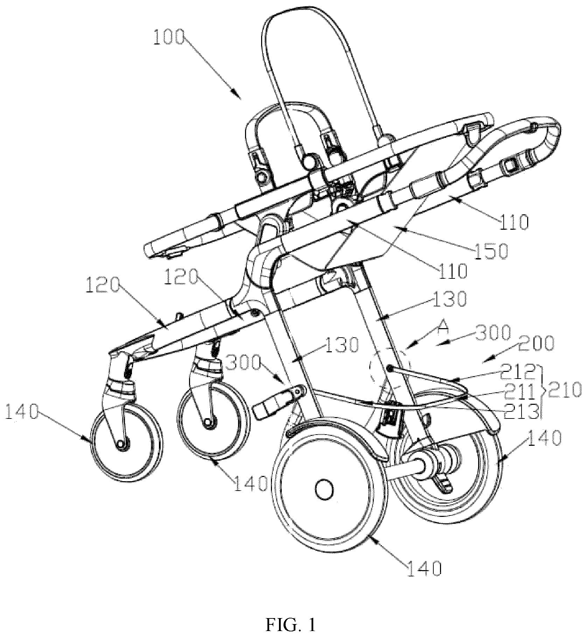

As shown in FIG. 1, an embodiment of the present invention provides a baby carriage, such as a stroller, including a frame 100, a storage basket 200, and two adjusting mechanisms 300. Certainly, in other embodiments, one adjusting mechanism 300 may be provided. The storage basket 200 of the baby carriage does not interfere with the mounting of other components on the baby carriage, and can flexibly accommodate items of various volumes.

Specifically, the frame 100 may include two opposite armrest support rods 110, two opposite front foot support rods 120, two opposite rear foot support rods 130, four wheel components 140, and a first riding component 150. The first riding component 150 is arranged between the two armrest support rods 110. In this embodiment, the first riding component 150 is a child seat. Certainly, in other embodiments, the first riding component 150 may also be a baby basket, a baby sleeping box, or a vehicle seat. The two front foot support rods 120 and the two rear foot support rods 130 are respectively arranged at a certain angle, and supported on bottom ends of the two armrest support rods 110. The four wheel components 140 are respectively supported on bottom ends of the two front foot support rods 120 and the two rear foot support rods 130.

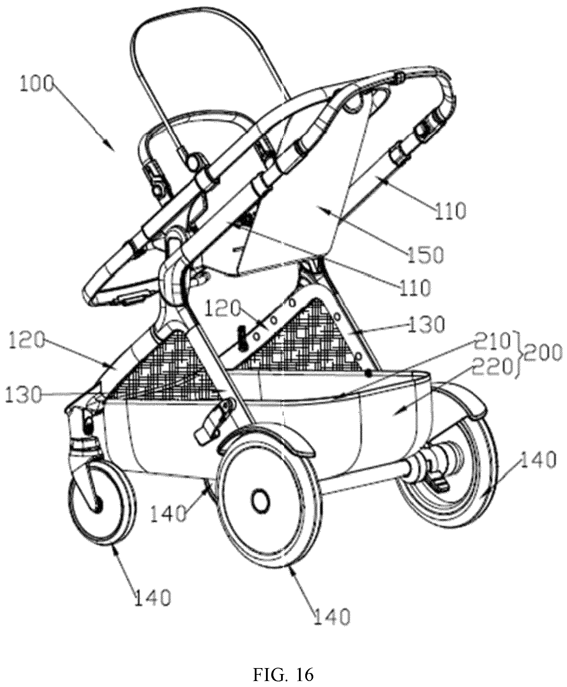

Specifically, as shown in FIGS. 1 and 16, the storage basket 200 includes a first basket frame 210 and a covering fabric 220 covering the outside of the first basket frame 210. In this embodiment, the first basket frame 210 is a U-shaped frame. The U-shaped frame includes a cross rod 211, and a first strut 212 and a second strut 213 respectively connected to two ends of the cross rod 211. An end of the first strut 212 away from the cross rod 211 and an end of the second strut 213 away from the cross rod 211 are respectively connected to the two rear foot support rods 130 through two adjusting mechanisms 300. Certainly, in other embodiments, the first basket frame 210 may also be in other shapes, for example, a V-shaped frame, which is not limited thereto. The first strut 212 and the second strut 213 can also be respectively connected to other positions of the frame 100, for example, respectively connected to the two front foot support rods 120, etc. In this embodiment, a rear side of the covering fabric 220 is wrapped around the first basket frame 210, and a front side of the covering fabric 220 is connected to the two front foot support rods 120, so that the covering fabric 220 encloses a storage space for accommodating items. Certainly, in other embodiments, the storage basket 200 may also include a second basket frame (not shown in the figures). The second basket frame and the first basket frame 210 enclose a closed frame. The covering fabric 220 is wrapped around the first basket frame 210 and the second basket frame to form a storage space.

In this embodiment, the first basket frame 210 is made of polyvinyl chloride (PVC) profiles. Certainly, in other embodiments, the first basket frame 210 may also be made of stainless steel, plastic or other materials.

As shown in FIG. 1, the two adjusting mechanisms 300 for connecting the first strut 212 and the second strut 213 to the two rear foot support rods 130 respectively have the same structure. The description will be made in detail below by taking one of the adjusting mechanisms 300 as an example.

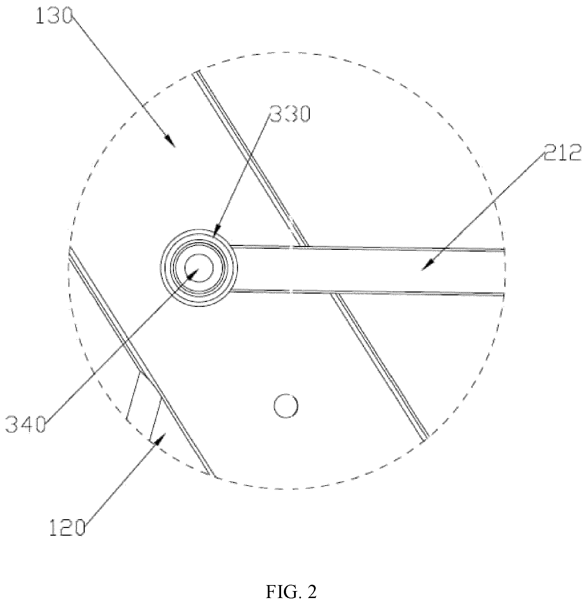

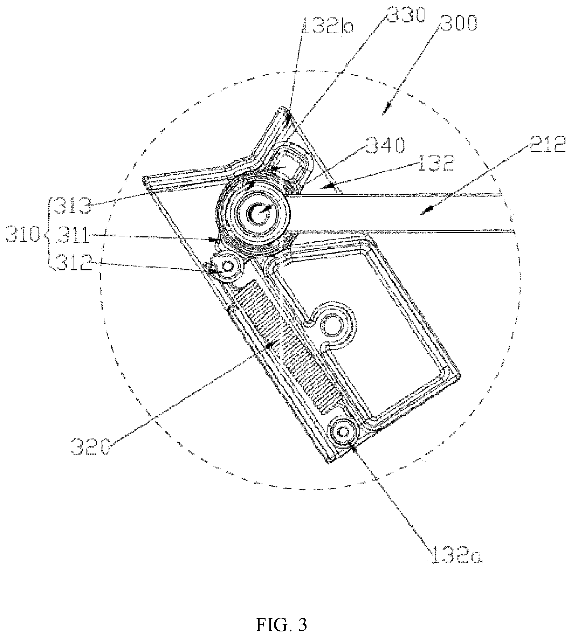

Specifically, as shown in FIGS. 2 and 3, the adjusting mechanism 300 includes a rotating base 310, a resetting member 320, a fixed base 330, and a rotating shaft 340.

Further, as shown in FIGS. 2, 3, and 6, the rear foot support rod 130 is provided with an accommodating cavity. Specifically, the rear foot support rod 130 has a mounting base 132 and a mounting cover 133. The mounting base 132 and the mounting cover 133 enclose the accommodating cavity. Both the rotating base 310 and the resetting member 320 are arranged in the accommodating cavity and positioned on the mounting base 132. The rotating base 310 is pivotally connected to the frame 100, and an end of the first basket frame 210 is connected to the rotating base 310. The rotating base 310 includes a rotating disk 311 on which a connecting arm 312 and a limiting part 313 are formed. The connecting arm 312 and the limiting part 313 are arranged opposite to each other along a certain diameter of the rotating disk 311. In this embodiment, the rotating disk 311, the connecting arm 312, and the limiting part 313 are integrally formed. Certainly, in other embodiments, the rotating disk 311, the connecting arm 312, and the limiting part 313 can also be three independent parts connected to one another. The rotating disk 311 is pivotally connected to the frame 100, an end of the resetting member 320 is connected to the frame 110, and another end of the resetting member 320 is connected to the connecting arm 312. The rotating disk 311 is roughly disc-shaped, and pivotally connected to the rear foot support rod 130, specifically to the mounting base 132. A surface of the rotating disk 311 facing away from the mounting base 132 is provided with a plurality of matching recesses 311a. In this embodiment, there are four matching recesses 311a, and the four matching recesses 311a are uniformly arranged in a circumferential direction of the rotating disk 311. Certainly, in other embodiments, the number and arrangement of the matching recesses 311a can also be adjusted according to actual needs. In this embodiment, the resetting member 320 is a tension spring. Certainly, in other embodiments, the resetting member 320 may also be other elastic components. An end of the resetting member 320 is connected to the connecting arm 312, and another end of the resetting member 320 is connected to the mounting base 132. Specifically, the mounting base 132 is provided with a protruding post 132a. Another end of the resetting member 320 is connected to the protruding post 132a. In this embodiment, the protruding post 132a is positioned at a lower end of the connecting arm 312. In this way, when the rotating disk 311 is subjected to an external force, and rotates clockwise in FIG. 3, such that the connecting arm 312 is rotated in a direction away from the protruding post 132a, the resetting member 320 is stretched and deformed. When the external force is removed, the connecting arm 312 drives the rotating disk 311 to rotate counterclockwise under the action of the elastic restoring force of the resetting member 320.

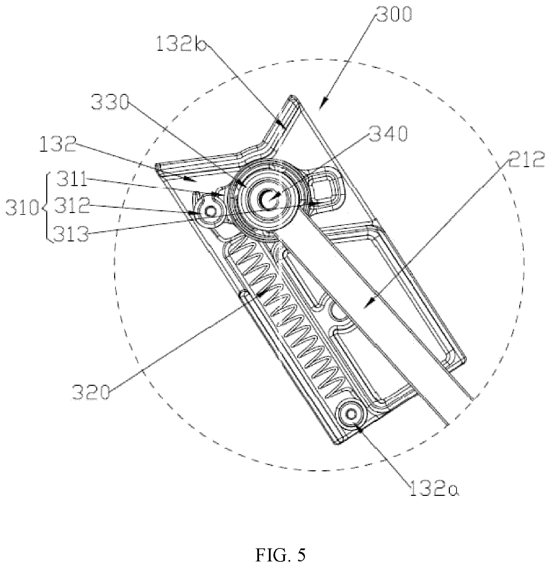

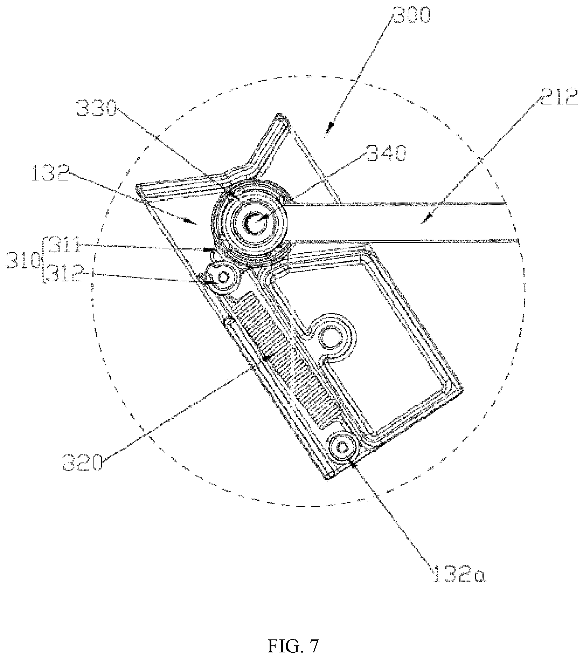

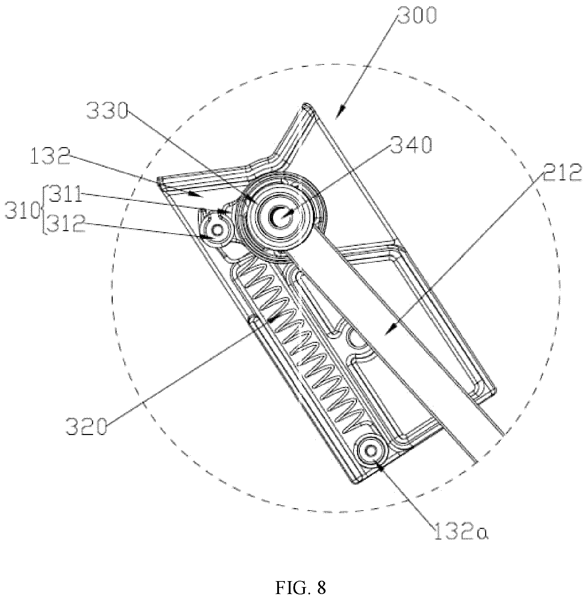

As shown in FIGS. 3 and 5, a blocking arm 132b is further arranged on the mounting base 132. The limiting part 313 can rotate with the rotating disk 311 to abut against the blocking arm 132b, so as to prevent the upwarp of the first strut 212 (or the second strut 213) due to a too large elastic restoring force of the resetting member 320 and affecting the use of the storage basket 200, and limit a rotation angle of the connecting arm 312. Certainly, in other embodiments, the limiting part 313 may also be omitted, as shown in FIGS. 7 and 8.

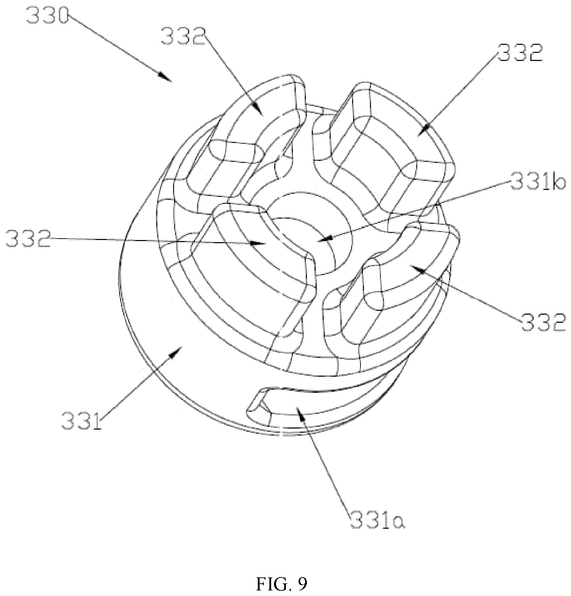

As shown in FIGS. 2, 3, 6, and 9, the fixed base 330 includes a substantially cylindrical fixed body 331, and a plurality of matching protrusions 332 arranged on the fixed body 331. In this embodiment, the fixed body 331 and the plurality of matching protrusions 332 are integrally formed. Certainly, in other embodiments, the fixed body 331 and the plurality of matching protrusions 332 may also be independent parts connected to each other. In this embodiment, there are four matching protrusions 332 that are evenly arranged on the fixed body 331 in the circumferential direction, and the four matching protrusions 332 matches the four matching recesses 311a in one-to-one correspondence, so that the fixed base 330 is fixedly connected to the rotating base 310. Specifically, the mounting cover 133 of the rear foot support rod 130 is provided with a mounting opening 133a communicating with the accommodating cavity. An end of the fixed base 330 provided with the matching protrusions 332 is inserted into the accommodating cavity through the mounting opening 133a to contact and match the matching recesses 311a. Certainly, in other embodiments, the matching recess 311a may also be arranged on the fixed base 330, and the matching protrusion 332 may be fixedly arranged on the rotating base 310, or the fixed base 330 may also cooperate with the rotating base 310 through other structures, and which are not limited herein. The fixed body 331 is positioned outside the accommodating cavity. A sidewall of the fixed body 331 is provided with a mounting groove 331a. The end of the first strut 212 (or the second strut 213) away from the cross rod 211 is inserted into the mounting groove 331a. In other words, the end of the first basket frame 210 is inserted into the mounting groove 331a, and the rotating shaft 340 extends through the fixed base 330 and the end of the first basket frame 210, to fix the end of the first basket frame 210 on the fixed base 330.

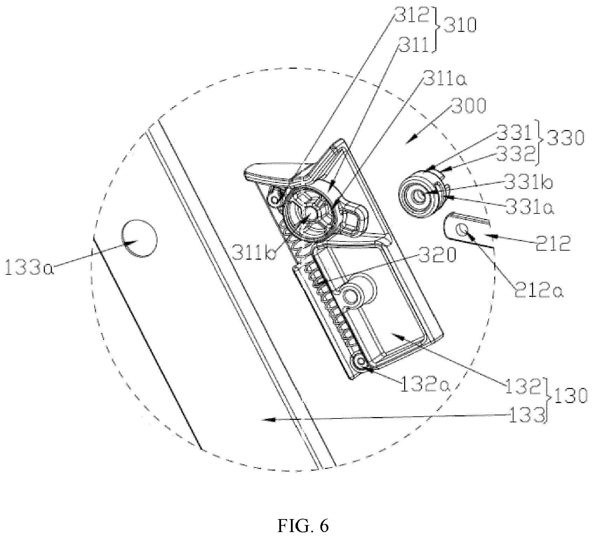

Further, as shown in FIG. 6, the fixed base 330 is provided with a first pivot hole 331b. The first pivot hole 331b axially extends through the fixed body 331 and communicates with the mounting groove 331a. Four positioning protrusions 332 are arranged around the first pivot hole 331b. The end of the first strut 212 (or the second strut 213) away from the cross rod 211 includes a fixing hole 212a. When the end of the first strut 212 (or the second strut 213) away from the cross rod 211 is inserted into the mounting groove 331a, the fixing hole 212a faces the first pivot hole 331b. A third pivot hole 311b is arranged on the rotating base 310. The four matching recesses 311a are arranged around the third pivot hole 311b. The mounting base 132 is provided with a fourth pivot hole (not shown in the figures). The rotating shaft 340 is sequentially inserted into the first pivot hole 331b, the fixing hole 212a, the mounting opening 133a, the third pivot hole 311b, and the fourth pivot hole. The rotating shaft 340 can be a pin, a screw or the like.

In this way, as shown in FIGS. 2 to 5, when the first basket frame 210 is rotated by an external force, the first strut 212 (or second strut 213) fixedly connected to the fixed base 330 drives the rotating base 310 through the fixed base 330 to rotate relative to the mounting base 132, that is, to rotate relative to the rear foot support rod 130. Similarly, when the external force is removed and the rotating base 310 is rotated under the action of the elastic restoring force of the resetting member 320, the rotating base 310 drives the first strut 212 (or the second strut 213), that is, the basket frame 210, to rotate relative to the rear foot support rod 130, through the fixed base 330. The arrangement of the fixed base 330 makes the force applied to the first strut 212 (or the second strut 213) and the rotating base 310 more uniform, such that compared with the first strut 212 (or the second strut 213) being directly connected to the rotating base 310, the first strut 212 (or the second strut 213) and the rotating base 310 are not easy to break and damage due to uneven force, which is beneficial to prolong the service life of the adjusting mechanism 300. Certainly, the fixed base 330 may also be omitted, and the first strut 212 (or the second strut 213) is directly connected to the rotating base 310.

The specific use process of the baby carriage is as follows.

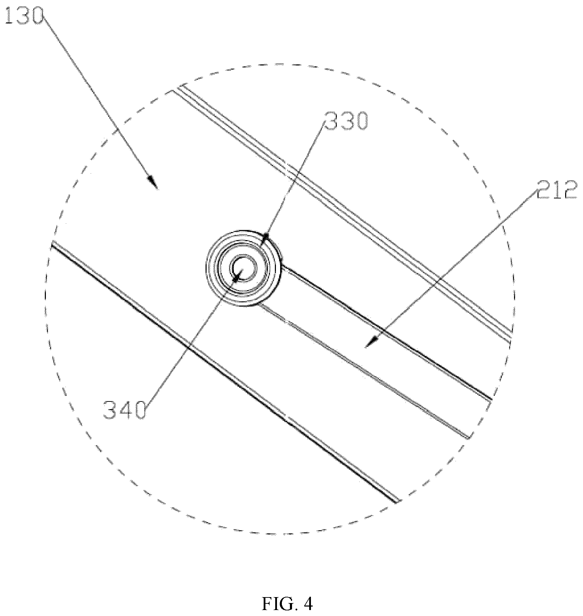

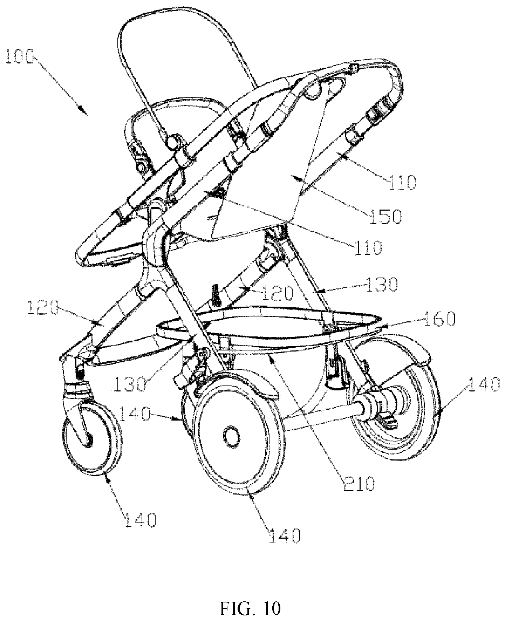

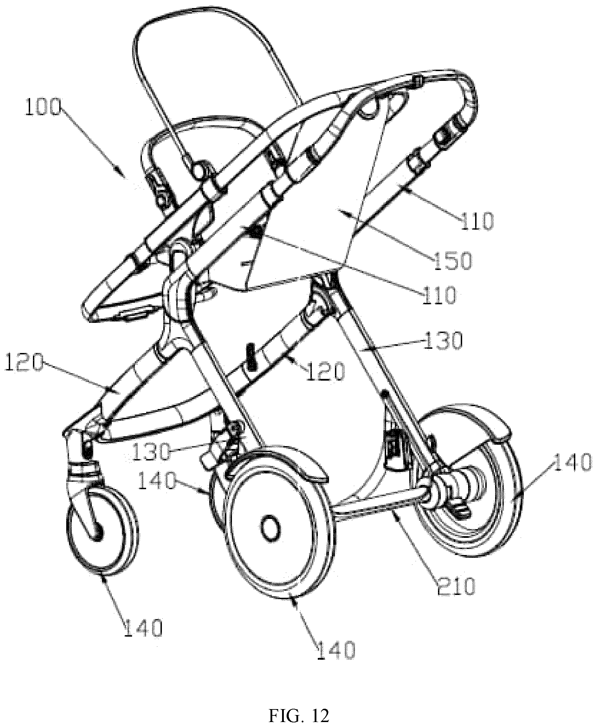

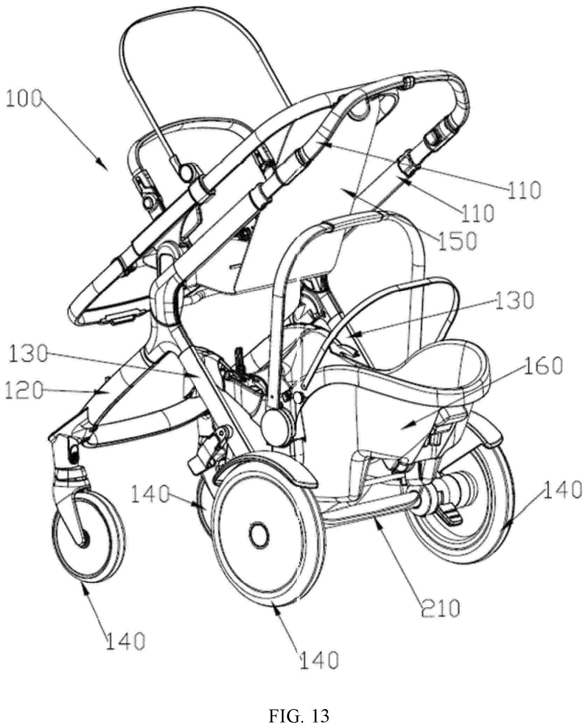

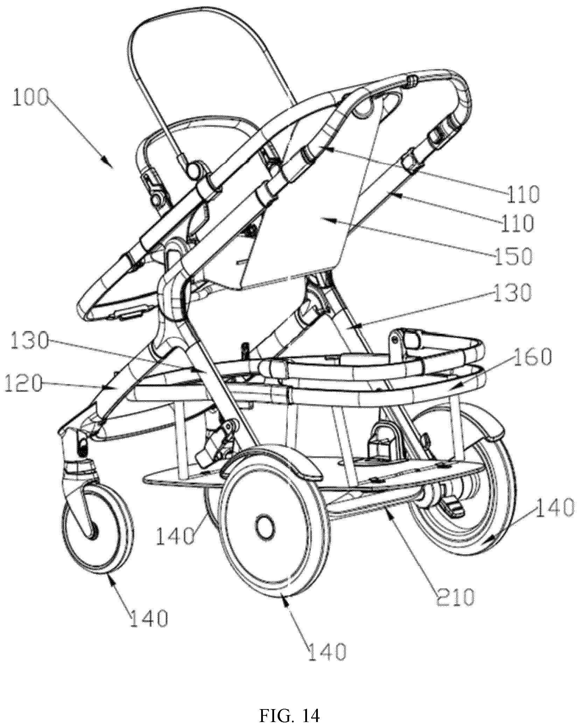

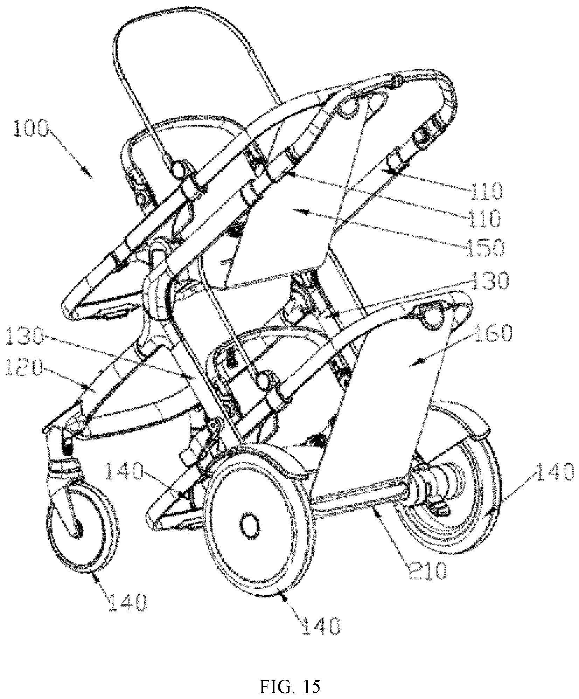

When the second riding component 160 (the storage basket as shown in FIG. 10, the vehicle seat as shown in FIG. 13, the sleeping box as shown in FIG. 14, or a child seat as shown in FIG. 15, etc.) needs to be mounted between the two rear foot support rods 130, to carry a second child, it is only necessary to directly engage the two sides of the second riding component 160 on the two rear foot support rods 130 respectively. Then, the first basket frame 210 is stressed by the vehicle seat as shown in FIG. 13, the sleeping box as shown in FIG. 14, the child seat as shown in FIG. 15 or the like, and is then rotated clockwise in FIGS. 2 and 3, relative to the rear foot support rod 130. That is, the first basket frame 210 is rotated obliquely downward, while the first basket frame 210 drives the two rotating bases 310 to rotate clockwise through the fixed bases 330 provided on the two rear foot support rods 130, such that the connecting arm 312 moves away from the protruding post 132a, and the resetting member 320 is stretched. In this way, when the second riding component 160 is mounted, the first basket frame 210 can be folded at the same time, avoiding the interference of the first basket frame 210 with the second riding component 160, i.e., the interference of the storage basket 200 with the second riding component 160, as shown in FIGS. 4, 5, and 11 to 15.

When the second riding component 160 is not needed, and the second riding component 160 is removed, the rotating base 310 will be rotated counterclockwise in FIGS. 4 and 5, under the action of the elastic restoring force of the resetting member 320, and drive the first basket frame 210 to rotate counterclockwise through the fixed base 330, that is, to rotate upward obliquely, such that the storage basket 200 is unfolded, and can have the storage function again, as shown in FIGS. 2, 3 and 11.

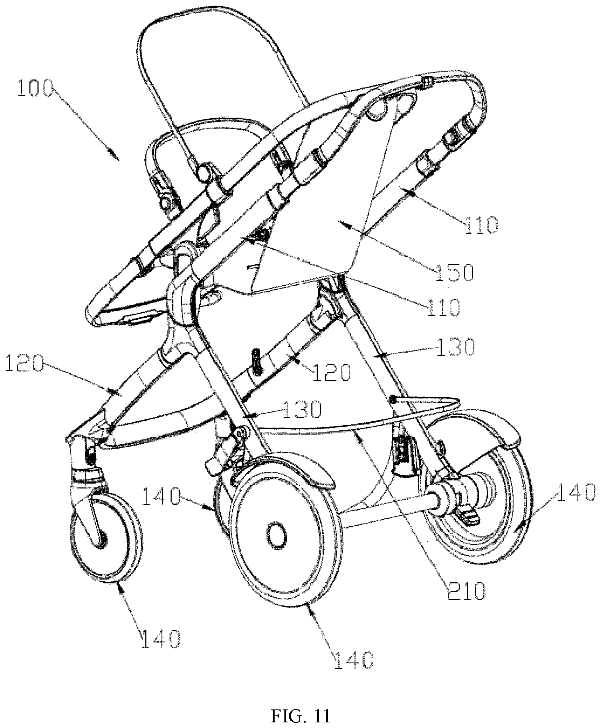

When items of large volumes need to be accommodate in the storage basket 200, the user can apply a downward external force to the first basket frame 210. Accordingly, the first basket frame 210 is subjected to the external force and will be rotated clockwise in FIGS. 2 and 3 relative to the rear foot support rod 130, that is, rotated obliquely downward, and at the same time, the first basket frame 210 drives the two rotating bases 310 to rotate clockwise through the fixed bases 330 arranged on the two rear foot support rods 130, such that the connecting arm 312 moves away from the protruding post 132a, and the resetting member 320 is stretched, as shown in FIGS. 4, 5, and 12. In this way, the storage basket 200 can provide a larger opening for the user to place items of large volumes in the storage space. When the external force is removed, the rotating base 310 will be rotated counterclockwise in FIGS. 4 and 5 under the action of the elastic restoring force of the resetting member 320, and drive the first basket frame 210 to rotate counterclockwise, that is, to rotate upward obliquely, through the fixed base 330, such that the storage basket 200 is partially or completely restored to its original shape, as shown in FIG. 11. Meanwhile, the storage basket 200 provides a larger opening to facilitate the user to take the items in the storage basket 200.

As described above, the baby carriage according to the present invention realizes the folding and unfolding and automatic reset functions of the storage basket 200, avoids the interference of the storage basket 200 with the second riding component 160, and can accommodate items of large volumes. In addition, the baby carriage according to the present application has simple structure, and is easy to implement. In addition, the rotating base 310, the resetting member 320, and part of the fixed base 330 in the adjusting mechanism 300 are all arranged at the inner side of the rear foot support rod, which saves space and does not affect the appearance of the baby carriage.

The above baby carriage has at least the following technical effects.

The two ends of the first basket frame 210 of the storage basket 200 can be movably connected to two sides of the frame 100 through two adjusting mechanisms 300, so that when it is necessary to mount the second riding component or other components on the baby carriage, the first basket frame 210 can be folded without interference trouble. In addition, when the items of large volumes need to be accommodated, the first basket frame 210 can be moved to provide users with a larger storage space. protection scope of the present application shall be subject to the appended claims.

## Claims

1. A baby carriage comprising:
a frame (100);
a storage basket (200) comprising a first basket frame (210); and
two adjusting mechanisms (300),
wherein two ends of the first basket frame (210) are movably connected to two sides of the frame (100) through the two adjusting mechanisms (300), respectively,
wherein at least one of the two adjusting mechanisms (300) comprises a rotating base (310), and
wherein the rotating base (310) is pivotally connected to the frame (100), and an end of the first basket frame (210) is connected to the rotating base (310),
**characterized in that** said at least one of the two adjusting mechanisms further comprises a resetting member (320);
wherein the rotating base (310) comprises a rotating disk (311) and a connecting arm (312) connected to the rotating disk (311); and
wherein the rotating disk (311) is pivotally connected to the frame (100), an end of the resetting member (320) is connected to the frame (100), and another end of the resetting member (320) is connected to the connecting arm (312).

2. The baby carriage according to claim 1, wherein a protruding post (132a) is arranged on the frame (100), and the end of the resetting member (320) is connected to the protruding post (132a).

3. The baby carriage according to claim 1 or 2, wherein the rotating base (310) further comprises a limiting part (313), and wherein a blocking arm (132b) is arranged on the frame (100), and the limiting part (313) is capable of abutting against the blocking arm (132b) to limit a rotation angle of the connecting arm (312).

4. The baby carriage according to any of the claims 1 to 3, wherein at least one of the two adjusting mechanisms (300) further comprises a fixed base (330);
wherein a first matching part is arranged on the fixed base (330), and a second matching part capable of matching the first matching part is arranged on the rotating base (310), and
wherein the end of the first basket frame (210) is fixedly connected to the fixed base (330), and the fixed base (330) is engaged with the rotating base (310) by matching the first matching part with the second matching part.

5. The baby carriage according to claim 4, wherein the first matching part is a matching protrusion (332), and a plurality of matching protrusions (332) are provided and evenly arranged on the fixed base (330); and the second matching part is a matching recess (311a), and a plurality of matching recesses (311a) are provided and evenly arranged on the rotating base (310).

6. The baby carriage according to claim 4 or 5, wherein at least one of the two adjusting mechanisms (300) further comprises a rotating shaft (340), and the fixed base (330) comprises a mounting groove (331a), and
wherein the end of the first basket frame (210) is inserted into the mounting groove (331a), and the rotating shaft (340) extends through the fixed base (330) and the end of the first basket frame (210) to fix the end of the first basket frame (210) on the fixed base (330).

7. The baby carriage according to any one of claims 1 to 6, wherein the first basket frame (210) is a U-shaped frame;
wherein the U-shaped frame comprises a cross rod (211), and a first strut (212) and a second strut (213) respectively connected to two ends of the cross rod (211); and
wherein an end of the first strut (212) away from the cross rod (211) and an end of the second strut (213) away from the cross rod (211) are movably connected to the two sides of the frame (100), respectively.

8. The baby carriage according to any one of claims 1 to 7, wherein the frame (100) comprises two opposite rear foot support rods (130); and the two ends of the first basket frame (210) are movably connected to the two rear foot support rods (130) through the two adjusting mechanisms (300), respectively.

9. The baby carriage according to claim 8, wherein the two adjusting mechanisms (300) are at least partially arranged at inner sides of the two rear foot support rods (130), respectively.

## Patentansprüche

1. Kinderwagen, aufweisend:
einen Rahmen (100);
einen Aufbewahrungskorb (200), aufweisend einen ersten Korbrahmen (210); und
zwei Einstellmechanismen (300),
wobei zwei Enden des ersten Korbrahmens (210) durch die zwei Einstellmechanismen (300) beweglich mit zwei Seiten des Rahmens (100) verbunden sind,
wobei mindestens einer der zwei Einstellmechanismen (300) eine drehbewegliche Basis (310) aufweist, und
wobei die drehbewegliche Basis (310) drehbar mit dem Rahmen (100) verbunden ist und ein Ende des ersten Korbrahmens (210) mit der drehbeweglichen Basis (310) verbunden ist,
**dadurch gekennzeichnet, dass** der mindestens eine der zwei Einstellmechanismen ferner ein Rückstellglied (320) aufweist;
wobei die drehbewegliche Basis (310) eine Drehscheibe (311) und einen mit der Drehscheibe (311) verbundenen Verbindungsarm (312) aufweist; und
wobei die Drehscheibe (311) drehbar mit dem Rahmen (100) verbunden ist, ein Ende des Rückstellglieds (320) mit dem Rahmen (100) verbunden ist und ein anderes Ende des Rückstellglieds (320) mit dem Verbindungsarm (312) verbunden ist.

2. Kinderwagen nach Anspruch 1, wobei ein vorstehender Pfosten (132a) an dem Rahmen (100) angeordnet ist und das Ende des Rückstellglieds (320) mit dem vorstehenden Pfosten (132a) verbunden ist.

3. Kinderwagen nach Anspruch 1 oder 2, wobei die drehbewegliche Basis (310) ferner ein Begrenzungsteil (313) aufweist und wobei ein Blockierarm (132b) an dem Rahmen (100) angeordnet ist, und das Begrenzungsteil (313) in der Lage ist, an dem Blockierarm (132b) anzuliegen, um einen Drehwinkel des Verbindungsarms (312) zu begrenzen.

4. Kinderwagen nach einem der Ansprüche 1 bis 3, wobei mindestens einer der zwei Einstellmechanismen (300) ferner eine feste Basis (330) aufweist;
wobei ein erstes Passteil an der festen Basis (330) angeordnet ist und ein zweites Passteil, das in der Lage ist, mit dem ersten Passteil zusammenzupassen, an der drehbeweglichen Basis (310) angeordnet ist, und
wobei das Ende des ersten Korbrahmens (210) fest mit der festen Basis (330) verbunden ist und die feste Basis (330) mit der drehbeweglichen Basis (310) in Eingriff steht, indem das erste Passteil mit dem zweiten Passteil zusammenpasst.

5. Kinderwagen nach Anspruch 4, wobei das erste Passteil ein Passvorsprung (332) ist und mehrere Passvorsprünge (332) bereitgestellt und an der festen Basis (330) gleichmäßig angeordnet sind; und das zweite Passteil eine Passaussparung (311a) ist und mehrere Passaussparungen (311a) bereitgestellt und an der drehbeweglichen Basis (310) gleichmäßig angeordnet sind.

6. Kinderwagen nach Anspruch 4 oder 5, wobei mindestens einer der zwei Einstellmechanismen (300) ferner eine Drehwelle (340) aufweist und die feste Basis (330) eine Montagenut (331a) aufweist, und
wobei das Ende des ersten Korbrahmens (210) in die Montagenut (331a) eingesetzt ist und sich die Drehwelle (340) durch die feste Basis (330) und das Ende des ersten Korbrahmens (210) erstreckt, um das Ende des ersten Korbrahmens (210) an der festen Basis (330) zu befestigen.

7. Kinderwagen nach einem der Ansprüche 1 bis 6, wobei der erste Korbrahmen (210) ein U-förmiger Rahmen ist;
wobei der U-förmige Rahmen eine Querstange (211) und eine erste Strebe (212) und eine zweite Strebe (213) aufweist, die mit zwei Enden der Querstange (211) verbunden sind; und
wobei ein von der Querstange (211) entferntes Ende der ersten Strebe (212) und ein von der Querstange (211) entferntes Ende der zweiten Strebe (213) mit den zwei Seiten des Rahmens (100) beweglich verbunden sind.

8. Kinderwagen nach einem der Ansprüche 1 bis 7, wobei der Rahmen (100) zwei entgegentgesetzt gelegene hintere Fußstützstangen (130) aufweist; und die zwei Enden des ersten Korbrahmens (210) durch die zwei Einstellmechanismen (300) beweglich mit den zwei hinteren Fußstützstangen (130) verbunden sind.

9. Kinderwagen nach Anspruch 8, wobei die zwei Einstellmechanismen (300) zumindest teilweise an Innenseiten der zwei hinteren Fußstützstangen (130) angeordnet sind.

## Revendications

1. Voiture d'enfant comprenant :
un bâti (100) ;
un panier de rangement (200) comprenant un premier bâti de panier (210) ; et
deux mécanismes de réglage (300),
dans laquelle deux extrémités du premier bâti de panier (210) sont raccordées, de manière mobile, aux deux côtés du bâti (100) par le biais des deux mécanismes de réglage (300) respectivement,
dans laquelle au moins l'un des deux mécanismes de réglage (300) comprend une base rotative (310) et un élément de réinitialisation (320),
dans laquelle la base rotative (310) est raccordée, de manière pivotante, au bâti (100), et une extrémité du premier bâti de panier (210) est raccordée à la base rotative (310),
dans laquelle la base rotative (310) comprend un disque rotatif (311) et un bras de raccordement (312) raccordé au disque rotatif (311) ; et
dans laquelle le disque rotatif (311) est raccordé, de manière pivotante, au bâti (100), une extrémité de l'élément de réinitialisation (320) est raccordée au bâti (100), et une autre extrémité de l'élément de réinitialisation (320) est raccordée au bras de raccordement (312).

2. Voiture d'enfant selon la revendication 1, dans laquelle un montant en saillie (132a) est agencé sur le bâti (100) et l'extrémité de l'élément de réinitialisation (320) est raccordée au montant en saillie (132a).

3. Voiture d'enfant selon la revendication 1 ou 2, dans laquelle la base rotative (310) comprend en outre une partie de limitation (313), et dans laquelle un bras de blocage (132b) est agencé sur le bâti (100), et la partie de limitation (313) est capable de venir en butée contre le bras de blocage (132b) afin de limiter un angle de rotation du bras de raccordement (312).

4. Voiture d'enfant selon l'une quelconque des revendications 1 à 3, dans laquelle au moins l'un des deux mécanismes de réglage (300) comprend en outre une base fixe (330) ;
dans laquelle une première partie d'adaptation est agencée sur la base fixe (330) et une seconde partie d'adaptation capable de correspondre à la première partie d'adaptation est agencée sur la base rotative (310), et
dans laquelle l'extrémité du premier bâti de panier (210) est raccordée, de manière fixe, à la base fixe (330), et la base fixe (330) est mise en prise avec la base rotative (310) en faisant correspondre la première partie d'adaptation avec la seconde partie d'adaptation.

5. Voiture d'enfant selon la revendication 4, dans laquelle la première partie d'adaptation est une saillie d'adaptation (332), et une pluralité de saillies d'adaptation (332) sont prévues et agencées de manière régulière sur la base fixe (330) ; et la seconde partie d'adaptation est un évidement d'adaptation (331a) et une pluralité d'évidements d'adaptation (311a) sont prévus et agencés de manière régulière sur la base rotative (310).

6. Voiture d'enfant selon la revendication 4 ou 5, dans laquelle au moins l'un des deux mécanismes de réglage (300) comprend en outre un arbre rotatif (340) et la base fixe (330) comprend une rainure de montage (331a), et
dans laquelle l'extrémité du premier bâti de panier (210) est insérée dans la rainure de montage (331a) et l'arbre rotatif (340) s'étend à travers la base fixe (330) et l'extrémité du premier bâti de panier (210) afin de fixer l'extrémité du premier bâti de panier (210) sur la base fixe (330).

7. Voiture d'enfant selon l'une quelconque des revendications 1 à 6, dans laquelle le premier bâti de panier (210) est un bâti en forme de U ;
dans laquelle le bâti en forme de U comprend une tige transversale (211), et une première entretoise (212) et une seconde entretoise (213) respectivement raccordées aux deux extrémités de la tige transversale (211) ; et
dans laquelle une extrémité de la première entretoise (212) à l'opposé de la tige transversale (211) et une extrémité de la seconde entretoise (213) à l'opposé de la tige transversale (211) sont raccordées, de manière mobile, aux deux côtés du bâti (100), respectivement.

8. Voiture d'enfant selon l'une quelconque des revendications 1 à 7, dans laquelle le bâti (100) comprend deux tiges de support de pied arrière (130) opposées ; et les deux extrémités du premier bâti de panier (210) sont raccordées, de manière mobile, aux deux tiges de support de pied arrière (130) par le biais des deux mécanismes de réglage (300), respectivement.

9. Voiture d'enfant selon la revendication 8, dans laquelle les deux mécanismes de réglage (300) sont au moins partiellement agencés au niveau des côtés internes des deux tiges de support de pied arrière (130), respectivement.
